# DEMANDE DE BREVET EUROPEEN

(11) **EP 4 407 195 A1**
(43) Date de publication de la demande: **31.07.2024**
(21) Numéro de dépôt: 24151157.5
(22) Date de dépôt: 10.01.2024
(51) Int. Cl.: F16B 2/22, F16L 3/233, H02G 3/32, F16L 3/12, F16L 3/137, F16L 3/227, B60R 16/02

(54) **ELEMENT AMELIORE DE SUPPORT DE CÂBLE, ENSEMBLE DE SUPPORT DE CÂBLE, SYSTEME ELECTRIQUE D AERONEF ET AERONEF**

(30) Priorité: 24.01.2023 FR 2300655
(71) Demandeur: AIRBUS OPERATIONS (S.A.S.), 31060 Toulouse (FR)
(72) Inventeur: SALGUES, Patrick, Toulouse (FR); HERVIER, Julien, Toulouse (FR); THUBERT, Benjamin, Toulouse (FR); CARRERE, Sylvain, Toulouse (FR)
(74) Mandataire: Airbus-OPS SAS

(57) **Abrégé**

L'invention concerne un support de câble (1a) comprenant un corps annulaire ouvert (10) et deux mors (13, 14) solidaires du corps annulaire ouvert (10) et s'étendant à partir du corps annulaire ouvert (10), agencés l'un (13) en regard de l'autre (14) et configurés pour former conjointement une pince, le corps annulaire ouvert (10) présentant une ouverture (10c), le support de câble (1a) étant tel que : l'ouverture (10c) du corps annulaire (10) est configurée pour permettre l'insertion d'au moins un câble dans le corps annulaire (10) ; les parties terminales du corps annulaire ouvert (10) bordant ladite ouverture (10c) présentent chacune une boucle (10a, 10b) configurée pour le passage d'un collier de serrage autobloquant agencé autour du corps annulaire ouvert (10) ; et, les mors (13, 14) formant pince comprennent chacun au moins une ouverture traversante (13a, 14a) configurée pour le passage d'un moyen de fixation verrouillable en position. L'invention concerne en outre un ensemble de fixation (1) comprenant un support de câble (1a) et un support intermédiaire de fixation (1b) du support de câble (1a).

Ainsi, il est avantageusement possible d'opérer une installation rapide et fiable de câbles, notamment dans des endroits exigus tels qu'à bord d'un aéronef.

## Description

### DOMAINE TECHNIQUE

La présente invention concerne un élément du type support de câble configuré pour assurer le maintien d'au moins une portion d'un ou plusieurs câbles dans une position déterminée. L'invention concerne plus particulièrement un élément support de câble ou support de toron adapté pour la mise en place de circuits électriques ou électroniques d'aéronef. L'invention concerne en outre un ensemble de fixation comprenant un piètement auquel est fixé un tel support de câble ou de toron.

### ÉTAT DE LA TECHNIQUE ANTÉRIEURE

De nombreux systèmes de fixation et de maintien en position de câbles existent et sont réalisés de façon variée en fonction de la nature du matériel auquel ils sont destinés, et de l'environnement. Souvent, un guide de forme annulaire dans lequel passe un ou plusieurs câbles est vissé sur un support métallique intermédiaire taraudé, au moyen d'au moins une vis et une rondelle, et le support intermédiaire est alors lui-même vissé sur une partie du matériel qui reçoit le câblage. Parfois des rivets sont également utilisés pour fixer les éléments entre eux. Si de tels assemblages se montrent solides et efficaces, les opérations de montage sont parfois longues et requièrent de nombreux gestes et des manipulations d'outils qui rallongent sensiblement le temps d'assemblage, ce qui peut être préjudiciable en termes de productivité dans le cadre d'applications industrielles.

La situation peut être améliorée.

### EXPOSÉ DE L'INVENTION

Un objet de la présente invention est de proposer un élément de fixation permettant un assemblage rapide et aisé d'un câblage, en particulier dans des endroits exigus où de nombreux équipements doivent êtres interconnectés de façon fiable.

A cet effet, il est proposé un support de câble comprenant un corps annulaire ouvert et deux mors solidaires du corps annulaire ouvert et s'étendant à partir du corps annulaire ouvert, agencés l'un en regard de l'autre et configurés pour former conjointement une pince, le corps annulaire ouvert présentant une ouverture configurée pour permettre l'insertion d'au moins un câble dans le corps annulaire, le support de câble étant caractérisé en ce que :
- chacune des deux parties terminales du corps annulaire ouvert bordant ladite ouverture présente une boucle, laquelle est configurée pour le passage d'un collier de serrage autobloquant agencé autour du corps annulaire ouvert, et laquelle est agencée en regard de la boucle de l'autre partie terminale parmi lesdites deux parties terminales,
- chacun des deux mors formant pince comprend au moins une ouverture traversante configurée pour le passage d'un moyen de fixation verrouillable en position, ledit moyen de fixation étant préférentiellement de type collier de serrage autobloquant ou de type cylindre à came, et ladite ouverture étant agencée en regard d'une ouverture identique de l'autre mors parmi les deux mors.

Ainsi, il est avantageusement possible d'opérer une installation rapide et fiable de câbles, notamment dans des endroits exigus tels qu'à bord d'un aéronef.

Avantageusement, l'un au moins des mors présente des cannelures agencées sur une face disposée en regard de l'autre mors.

L'invention a également pour objet un ensemble de support de câble comprenant un support de câble tel que décrit ci-avant ainsi qu'un support intermédiaire, le support intermédiaire comprenant une embase pourvue de moyens de fixation, une jambe, et une partie terminale configurée pour être au moins partiellement insérée et maintenue entre lesdits mors du support de câble, la partie terminale présentant une ouverture traversante configurée pour être disposée dans l'alignement des ouvertures traversantes des mors lorsque la partie terminale est insérée entre les mors, et agencée pour le passage dudit élément de fixation.

Le support de câble selon l'invention peut également comporter les caractéristiques suivantes, considérées seules ou en combinaison :
- La partie terminale du support intermédiaire présente des cannelures de formes complémentaires aux cannelures agencées sur une face de l'un au moins des mors.
- La jambe du support intermédiaire présente des cannelures de formes complémentaires aux cannelures de l'un au moins des mors du support de câble.
- La jambe et l'embase du support intermédiaire sont reliées entre elles par une liaison articulée, préférentiellement de type liaison pivot.
- L'ensemble de support est fabriqué dans un ou plusieurs matériaux thermoformés.

L'invention a également pour objet un kit de support de câble comprenant un ensemble de support tel que précité, ainsi qu'au moins un collier de serrage rapide autobloquant ou un élément de fixation de type cylindre à came, configuré pour être inséré à travers des ouvertures traversantes desdits mors et pour maintenir ensemble le support de câble et le support intermédiaire.

L'invention a de plus pour objet un système électrique ou électronique comprenant un support de câble ou un ensemble de support de câble tels que décrits ci-avant.

Enfin, l'invention a pour objet un aéronef comprenant un système électrique ou électronique comprenant un support de câble, un ensemble de support de câble ou un système tels que précédemment décrits.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints :
[Fig. 1] illustre schématiquement un support de câble porté par un support intermédiaire selon un mode de réalisation ;
[Fig. 2] est une vue en perspective du support de câble et du support intermédiaire déjà représentés sur la Fig. 1 ;
[Fig. 3] est un agrandissement d'une partie de la vue en perspective représentée sur la Fig. 2 ;
[Fig. 4] illustre schématiquement une variante de réalisation de l'ensemble composé du support de câble et du support intermédiaire, déjà représentés sur les Fig. 1, Fig. 2 et Fig. 3 ;
[Fig. 5] illustre schématiquement et en perspective un assemblage de supports de câble sur un même support intermédiaire, selon un mode de réalisation ;
[Fig. 6] illustre schématiquement des moyens de fixation d'un support de câble sur un support intermédiaire, selon un mode de réalisation ;
[Fig. 7] est une vue partielle des supports représentés sur la Fig. 6 et illustre des détails des moyens de fixation entre un support de câble et un support intermédiaire ; et,
[Fig. 8] illustre un aéronef comprenant un support de câble ou un ensemble support de câble, selon un mode de réalisation.

### EXPOSÉ DÉTAILLÉ DE MODES DE RÉALISATION

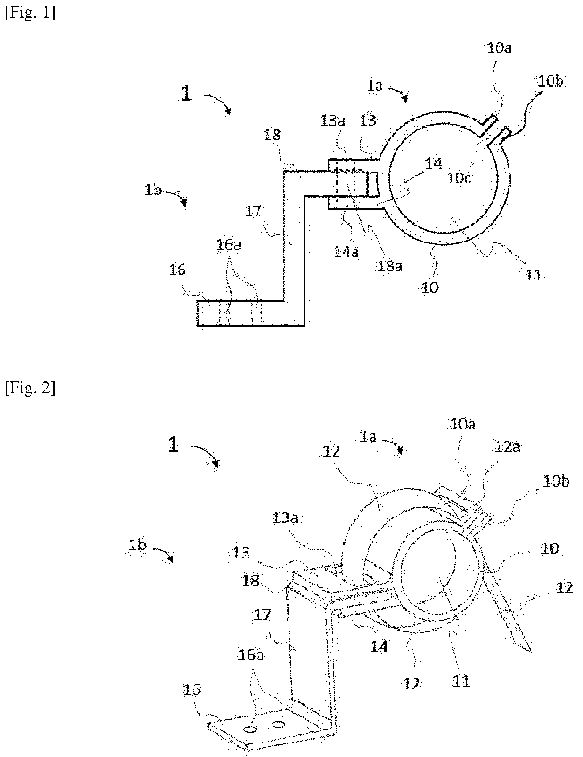

La **Fig.** 1 est une représentation schématique d'un ensemble 1 de support de câble (au sens de conducteur électrique) configuré pour supporter un ou plusieurs câbles. L'ensemble support de câble comprend un support de câble 1a ainsi qu'un support intermédiaire 1b faisant office de piètement pour le support de câble 1a. Dans la présente description, le terme « support de câble » désigne un élément configuré pour porter, maintenir, fixer, guider ou positionner un ou plusieurs câbles selon un placement prédéfini ou encore pour porter, maintenir, fixer, guider ou positionner un toron ou un faisceau (c'est-à-dire un assemblage de câble, parfois nommé « câblage », éventuellement structuré d'une certaine façon). Le terme « ensemble support de câble » désigne quant à lui un ensemble d'éléments comprenant un support de câble tel que défini ci-avant et un support intermédiaire configuré pour supporter lui-même un support de câble. Un tel ensemble peut être compris dans un kit de support de câble comprenant en outre des éléments accessoires, tels qu'un ou plusieurs colliers de serrage, de la visserie, etc. Le support intermédiaire 1b est prévu pour maintenir le support de câble 1a. Avantageusement, le support intermédiaire 1b peut servir à maintenir plusieurs supports de câble semblables au support de câble 1a. Le support intermédiaire 1b est nommé support intermédiaire en ce sens qu'il opère une fonction de support de support de câble.

Le support de câble 1a comprend un corps annulaire ouvert 10, c'est-à-dire un corps en forme d'anneau ouvert ou de cylindre ouvert. Les termes « anneau ouvert » ou « cylindre ouvert » désignent ici un anneau ou un cylindre qui n'est pas complètement fermé, structuré comme un anneau / cylindre dont une portion d'anneau / cylindre aurait été retirée, de sorte à pouvoir insérer ou retirer un élément dans ou hors de l'anneau / cylindre. Dans la suite de la présente description, le terme anneau sera utilisé pour désigner plus largement une forme d'anneau ou de cylindre, ou encore une forme sensiblement similaire à un anneau ou à un cylindre. Un espace libre (ou encore ouverture ou écartement) 10c sépare les deux parties terminales de l'anneau ouvert 10. Une ouverture traversante 11 constitue l'intérieur de l'anneau ouvert 10. Selon un mode de réalisation, l'anneau ouvert 10 est fabriqué à partir d'un matériau lui conférant une certaine élasticité, de nature à permettre d'écarter les bords de l'ouverture 10c l'une de l'autre et d'en accroître l'écartement pour faciliter l'insertion d'un câble dans l'anneau ouvert 10 de sorte que le câble soit ceinturé par l'anneau ouvert 10 et traverse alors l'ouverture traversante 11 de l'anneau ouvert 10. Lorsqu'un câble est inséré dans l'anneau ouvert 10, il est alors guidé en position par l'anneau ouvert 10, dès lors que l'anneau ouvert 10 est lui-même maintenu dans une position prédéterminée. Avantageusement, l'élasticité de l'anneau ouvert 10 permet à ses parties terminales disposées de part et d'autre de l'ouverture 10c, de reprendre leurs positions initiales (avant écartement) après l'insertion d'un ou plusieurs câbles dans l'anneau ouvert 10. Selon un mode de réalisation, chacune des parties terminales de l'anneau ouvert comprend une boucle de matière configurée pour le passage de collier de serrage autobloquant, parfois connu sous le nom de collier « Ty-rap » ou « serre-câbles ». Ainsi, l'une des parties terminales délimitant l'ouverture 10c comprend une boucle de matière 10a et l'autre des parties terminales délimitant l'ouverture 10c comprend une boucle de matière 10b agencée en regard de la boucle de matière 10a. Les boucles 10a et 10b forment chacune saillie. En d'autres termes, les boucles ne s'étendent pas suivant le profil de l'anneau, mais forment chacune un rebord, par exemple selon une direction radiale ou sensiblement radiale par rapport à l'anneau. Selon un mode de réalisation, l'anneau ouvert 10 porte astucieusement deux mors 13 et 14 s'étendant radialement ou sensiblement radialement par rapport à lui, vers l'extérieur, et parallèlement ou sensiblement parallèlement l'un à l'autre, formant ainsi une pince configurée pour serrer un élément extérieur inséré entre les deux mors 13 et 14. Selon un mode de réalisation, les mors 13 et 14 ne s'étendent pas radialement mais s'étendent parallèlement l'un à l'autre, dans la continuité de deux cordes parallèles s'inscrivant dans le profil de l'anneau. Avantageusement, le matériau utilisé pour la fabrication du support de câble 1a présente une certaine souplesse et élasticité permettant aux mors 13 et 14 opérant comme une pince d'exercer éventuellement une pression sur un élément inséré entre les deux mors 13 et 14, en fonction de l'épaisseur dudit élément inséré entre les deux mors 13 et 14, et au regard de l'écartement entre les deux mors 13 et 14. Selon un mode de réalisation, le support intermédiaire 1b est configuré pour porter le support de câble 1a et présente à cet effet, une embase 16, une jambe 17 et une partie terminale 18, laquelle partie terminale est configurée pour être insérée entre les mors 13 et 14. Selon un mode de réalisation, l'embase 16 est configurée pour être fixée sur un support ou substrat de forme plane ou sensiblement plane grâce à des moyens de fixation 16a, la jambe 17 est perpendiculaire ou sensiblement perpendiculaire à l'embase 16 et la partie terminale 18 est parallèle ou sensiblement parallèle à l'embase 16. Cet exemple n'est cependant pas limitatif et le support intermédiaire 1b peut présenter toute autre forme ou configuration utile à un maintien efficace du support de câble 1a, ou de plusieurs supports de câble similaires au support de câble 1a. Selon un mode de réalisation, la liaison entre l'embase 16 et la jambe 17 est une liaison articulée de type pivot. Selon un autre mode de réalisation, la liaison entre l'embase 16 et la jambe 17 est une liaison de type rotule permettant un positionnement de la jambe selon deux degrés de liberté. Avantageusement, la liaison articulée implémentée entre l'embase 16 et la jambe 17, le cas échéant, présente une force de friction suffisamment importante pour permettre un maintien en position de la jambe 17 par rapport à l'embase 16 en l'absence de force exercée sur la jambe 17, supérieure à un seuil prédéterminé. En d'autres termes, la liaison articulée est telle qu'il est possible d'opérer manuellement un réglage en position de la jambe 17 par rapport à l'embase 16, lequel réglage subsiste ensuite en l'absence de manipulation. Selon un mode de réalisation, les moyens de fixation de l'embase 16 sur un support plan ou quasi plan sont des ouvertures traversantes configurées pour le passage d'une vis ou d'un rivet. Selon une variante de réalisation, les moyens de fixation 16a sont des clips configurés pour un assemblage sur des éléments de forme complémentaire aux clips. Selon un autre exemple encore, les moyens de fixation 16a sont des aimants en néodyme. Ces exemples ne sont toutefois pas limitatifs. Avantageusement, les mors 13 et 14 opérant comme une pince sur la partie terminale 18 du support intermédiaire, ainsi que la partie terminale elle-même, comprennent chacun au moins une ouverture configurée pour le passage d'un collier de serrage autobloquant. Selon l'exemple représenté sur la Fig. 1, le mors 13, la partie terminale 18 et l'autre mors 14 présentent tous trois une ouverture unique, et les trois ouvertures sont agencées de sorte à être alignées lorsque la partie terminale 18 du support intermédiaire 1b est insérée entre les mors 13 et 14 du support de câble 1a. Le mors 13 comprend une ouverture 13a ; le mors 14 comprend une ouverture 14a et la partie terminale 18 comprend une ouverture 18a. Ainsi il est possible d'insérer un unique collier de serrage autobloquant via les ouvertures 13a, 14a et 18a alignées, ainsi que via les boucles de matière 10a et 10b respectivement agencées sur chacune des parties terminales de l'anneau ouvert 10. Une telle configuration permet d'opérer un bon positionnement d'un câble à l'intérieur de l'anneau ouvert 10, alors fermé par le collier de serrage, et de maintenir le support de câble 1a solidaire du support intermédiaire 1b, par l'effet du même collier de serrage.

Selon une variante de réalisation, les mors 13 et 14 ainsi que la partie terminale 18 peuvent comprendre chacun plusieurs ouvertures configurées pour le passage d'un collier autobloquant de sorte qu'un premier collier puisse être dédié à une bonne fermeture de l'anneau ouvert 10 autour d'un câble inséré dans l'ouverture traversante 11 et un deuxième collier puisse garantir un bon maintien en position du support de câble 1a sur le support intermédiaire 1b.

Avantageusement, le mors 13 présente des cannelures sur sa face « intérieure » faisant face au mors 14 pour mieux agripper la partie terminale 18 lorsque celle-ci est insérée entre les mors 13 et 14. Avantageusement encore, la partie terminale 18 présente des cannelures de formes complémentaires aux formes des cannelures du mors 13 et/ou du mors 14 pour opérer un bon maintien en position de la partie terminale 18 entre les mors 13 et 14. Selon un mode de réalisation, chacun des mors 13 et 14 présente des cannelures et la partie terminale 18 présente des cannelures sur l'une seulement de ses faces ou encore sur ses deux faces.

Selon un mode de réalisation, les cannelures des mors 13 et 14 sont agencées perpendiculairement par rapport à la direction selon laquelle s'étendent les mors à partir de l'anneau ouvert 10 formant le corps du support de câble 1a. Selon cet exemple, les cannelures de la partie terminale 18 s'étendent perpendiculairement à la direction selon laquelle s'étend la partie terminale 18 à partir de l'extrémité de la jambe 17 opposée à l'embase 16, de sorte que les cannelures du ou des mors et les cannelures de la partie terminale 18 soient parallèles entre elles, et donc de formes complémentaires. Avantageusement, les cannelures présentent chacune un profil en forme de triangle, permettant une insertion aisée de la partie terminale 18 tout en opérant chacune un rôle de butée anti-retour pour faciliter le maintien en position lors du montage. Bien évidemment, cet exemple de réalisation n'est pas limitatif et d'autres profils de cannelures peuvent être utilisés (semi-circulaires, en créneaux, etc.).

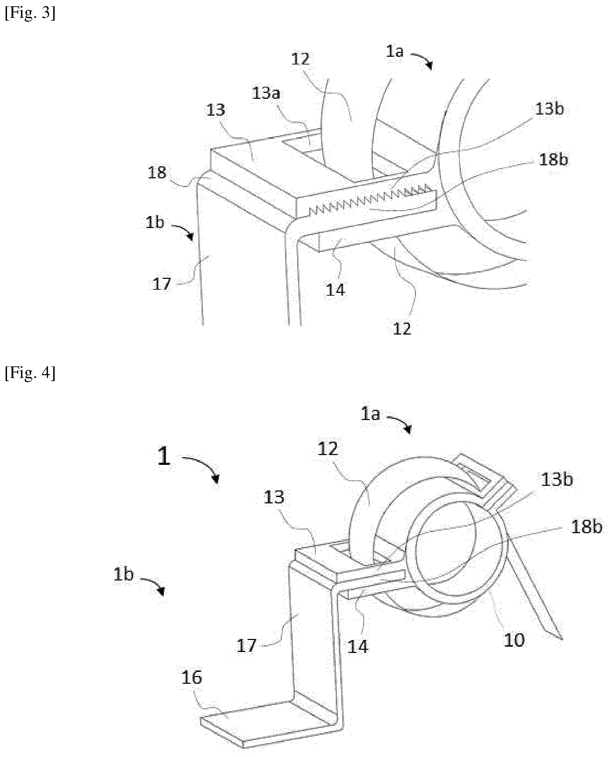

La Fig. 2 est une vue en perspective de l'ensemble support de câble 1 composé du support de câble 1a et du support intermédiaire 1b. L'ensemble 1 est vu ici lorsqu'un collier de serrage 12 est inséré à travers les ouvertures traversantes 13a, 14a et 18a et à travers les boucles de matière 10a et 10b, opérant à la fois une fermeture de l'anneau ouvert 10 et un verrouillage en position du support de câble 1a sur le support intermédiaire 1b. La Fig. 3 est une vue agrandie de la portion de l'ensemble 1 illustrant de façon détaillée le positionnement de la partie terminale 18 du support intermédiaire 1b entre les mors 13 et 14 du support de câble 1a. Selon l'exemple décrit, le mors 13 présente des cannelures sur sa face intérieure faisant face au mors 14, lesquelles cannelures sont de formes complémentaires aux cannelures de la partie terminale 18. En fonction de l'écartement entre les mors 13 et 14, au regard de l'épaisseur de la partie terminale 18, les cannelures ne sont pas forcément utiles si le nombre de câbles que porte le support de câble 1a est réduit, et la Fig. 4 illustre un exemple de réalisation où le support de câble 1a ainsi que le support intermédiaire 1b sont dépourvus de cannelures. Une telle configuration opère toutefois un maintien en position moins précis entre le support de câble 1a et le support intermédiaire 1b qu'en présence de cannelures.

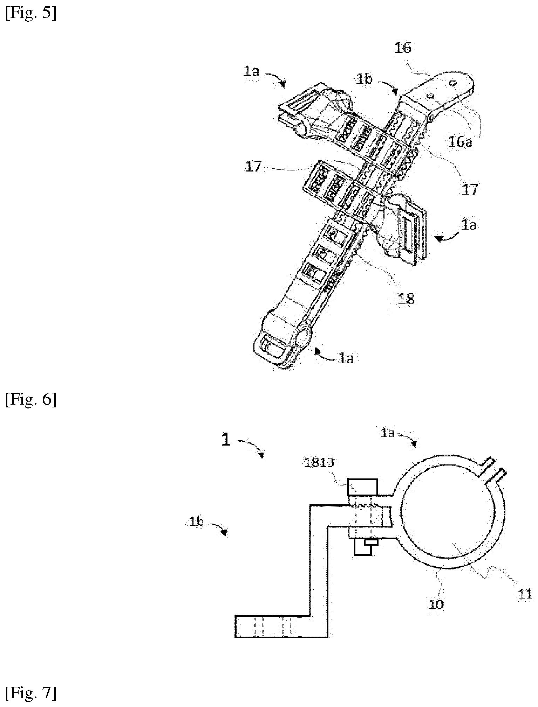

Selon un mode de réalisation illustré sur la **Fig. 5****,** le support intermédiaire 1b est configuré pour porter et maintenir plusieurs supports de câbles similaires au support de câble 1a. Selon ce mode de réalisation, la partie terminale 18 est agencée de sorte à être alignée avec la jambe 17, la jambe 17 présente des cannelures sur toute sa longueur, et la liaison articulée entre l'embase 16 et la jambe 17 est une liaison pivot. Avantageusement, le support de câble 1a peut présenter des cannelures de mors suivant une autre orientation que celle décrite précédemment. Par exemple, les cannelures des mors 13 et 14 peuvent s'étendre selon une même direction que celle suivant laquelle s'étendent les mors 13 et 14 à partir de l'anneau 10. Cela permet un assemblage de plusieurs supports 1a tel que cela est représenté sur la Fig. 5, assemblage selon lequel un élément support 1a s'étend suivant la direction longitudinale de la jambe 17 du support intermédiaire 1b et deux autres supports 1a s'étendent perpendiculairement à la jambe 17 du support intermédiaire 1b. Un tel assemblage est particulièrement avantageux pour agencer des croisements de câbles ou de torons, de façon ordonnée, et garantir un bon maintien en position de l'ensemble. Bien évidemment, d'autres configurations d'agencement de cannelures de mors 13 et 14 d'un support 1a peuvent être réalisées pour obtenir une plus grande variété d'orientation de câbles ou de torons, les uns par rapport aux autres.

La **Fig. 6** illustre un mode de réalisation de l'ensemble de support de câble 1 selon lequel le support de câble 1a est fixé au support intermédiaire 1b par un élément de fixation du type cylindre à came. Selon ce mode de réalisation, les ouvertures traversantes 13a et 14a des mors 13 et 14 du support de câble 1a, ainsi que l'ouverture traversante 18a de la partie terminale 18 du support intermédiaire 1b, présentent une forme d'alésage auquel est adjointe une découpe carrée ou rectangulaire en bordure de l'alésage pour permettre le passage d'un cylindre à came 1813, et une rotation de celui-ci après insertion à travers les trois ouvertures alignées 13a, 14a et 18a.

Ainsi, le cylindre à came 1813 comprend un corps cylindrique pourvu d'une tête 1813h plus large que le corps, configurée pour prendre appui en bordure de l'ouverture 13a ou 14a du mors sur lequel elle s'appuie après insertion et l'extrémité opposée du cylindre à came 1813, du côté opposé à la tête comprend une came 1813c configurée pour prendre appui en bordure de l'autre parmi les ouvertures 13a et 14a des mors 13 et 14, après rotation de l'élément cylindrique 1813 dans les trois ouvertures 13a, 14a et 18a, opérant ainsi un verrouillage, tel un mécanisme de serrure. Avantageusement, cette configuration permet un assemblage rapide et sûr d'un support de câble tel que le support de câble 1a sur un support intermédiaire tel que le support intermédiaire 1b. La tête 1813h du cylindre à came 1813 peut comprendre une empreinte de forme complémentaire à la forme d'un outil (tournevis, clef, etc.) ou être configurée pour être tournée facilement d'un quart de tour de façon manuelle.

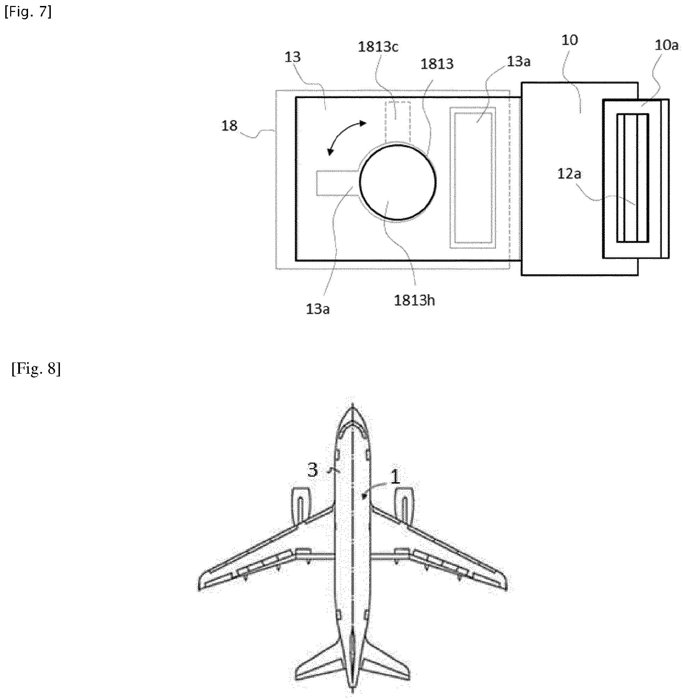

La **Fig. 7** est une vue partielle de dessus du support de câble 1a déjà représenté sur la Fig. 6 illustrant par une flèche bidirectionnelle une rotation d'un quart de tour du cylindre à came 1813 après insertion à travers des ouvertures alignées du mors 13, de la partie terminale 18 et du mors 14 (non visible sur la Fig. 7). Il est à noter que selon l'exemple de réalisation représenté ici, les mors 13 et 14 ainsi que la partie terminale 18 comprennent chacun deux ouvertures traversantes 13a. Ainsi, et toujours selon cet exemple, un collier de serrage peut être utilisé pour fermer l'anneau ouvert 12a et le cylindre à came 1813 est utilisé pour la fixation et le maintien du support de câble 1a sur le support intermédiaire 1b.

La **Fig. 8** représente un aéronef 3 comprenant au moins un ensemble support de câble 1. L'usage de tels ensembles supports de câble dans un aéronef permet avantageusement de faciliter les opérations de montage des systèmes électriques et électroniques, notamment dans des endroits exigus, et d'accroitre ainsi la productivité. Avantageusement, l'ensemble de support de câble 1 peut être livré sous la forme de kits comprenant chacun un support intermédiaire 1b, un ou plusieurs supports de câble 1a, un ou plusieurs colliers de serrage autobloquants, et/ou un ou plusieurs cylindres à cames pour la fixation de supports de câble similaires au support de câble 1a sur un support intermédiaire similaire au support intermédiaire 1b. Un tel kit peut en outre comprendre des moyens de fixation de l'embase du support intermédiaire sur un élément mécanique offrant une surface plane ou sensiblement plane.

## Revendications

1. Support de câble (1a) comprenant un corps annulaire ouvert (10) et deux mors (13, 14) solidaires du corps annulaire ouvert (10) et s'étendant à partir du corps annulaire ouvert (10), agencés l'un (13) en regard de l'autre (14) et configurés pour former conjointement une pince, le corps annulaire ouvert (10) présentant une ouverture (10c) configurée pour permettre l'insertion d'au moins un câble dans le corps annulaire (10), le support de câble (1a) étant **caractérisé en ce que** :
- chacune des deux parties terminales du corps annulaire ouvert (10) bordant ladite ouverture (10c) présente une boucle (10a, 10b), laquelle est configurée pour le passage d'un collier de serrage autobloquant agencé autour du corps annulaire ouvert (10), et laquelle est agencée en regard de la boucle de l'autre partie terminale parmi lesdites deux parties terminales,
- chacun des deux mors (13, 14) formant pince comprend au moins une ouverture traversante (13a, 14a) configurée pour le passage d'un moyen de fixation verrouillable en position, ledit moyen de fixation étant préférentiellement de type collier de serrage autobloquant ou de type cylindre à came, et ladite ouverture étant agencée en regard d'une ouverture identique de l'autre mors parmi les deux mors (13, 14).

2. Support de câble (1a) selon la revendication 1, dans lequel l'un au moins des mors (13) présente des cannelures agencées sur une face disposée en regard de l'autre mors (14).

3. Ensemble de support (1) de câble comprenant un support de câble (1a) selon l'une des revendications 1 et 2 ainsi qu'un support intermédiaire (1b), le support intermédiaire (1b) comprenant une embase (16) pourvue de moyens de fixation (16a), une jambe (17), et une partie terminale (18) configurée pour être au moins partiellement insérée et maintenue entre lesdits mors (13, 14) du support de câble (1a), la partie terminale (18) présentant une ouverture traversante (18a) configurée pour être disposée dans l'alignement des ouvertures traversantes (13a, 14a) des mors (13, 14) lorsque la partie terminale (18) est insérée entre les mors (13, 14), et agencée pour le passage dudit élément de fixation.

4. Ensemble de support (1) de câble selon la revendication 3, dans lequel la partie terminale (18) du support intermédiaire (1b) présente des cannelures de formes complémentaires aux cannelures agencées sur une face de l'un (13) au moins des mors (13, 14).

5. Ensemble de support (1) de câble selon l'une des revendications 3 et 4, dans lequel la jambe (17) du support intermédiaire (1b) présente des cannelures de formes complémentaires aux cannelures de l'un au moins des mors (13, 14) du support de câble (1a).

6. Ensemble de support (1) de câble selon l'une des revendications 3 à 5, dans lequel la jambe (17) et l'embase (16) du support intermédiaire (1b) sont reliées entre elles par une liaison articulée, préférentiellement de type liaison pivot.

7. Ensemble de support (1) de câble selon l'une des revendications 3 à 6, fabriqué dans un ou plusieurs matériaux thermoformés.

8. Kit de support de câble comprenant un ensemble de support (1) selon l'une des revendications 3 à 7, ainsi qu'au moins un collier de serrage rapide autobloquant ou un élément de fixation de type cylindre à came, configuré pour être à travers des ouvertures traversantes desdits mors et pour maintenir solidairement le support de câble (1a) et le support intermédiaire (1b).

9. Système électrique ou électronique comprenant un support de câble (1a) selon l'une des revendications 1 et 2 ou un ensemble de support (1) de câble selon l'une des revendications 2 à 8.

10. Aéronef (3) comprenant un système électrique ou électronique selon la revendication 9.
